# EUROPEAN PATENT APPLICATION

(11) **EP 4 841 736 A1**
(43) Date of publication of application: **18.11.2026**
(21) Application number: 26171617.9
(22) Date of filing: 10.04.2026
(51) Int. Cl.: H01M 10/0562, H01M 4/38, H01M 4/134, H01M 10/0525, H01M 10/0585

(54) **SOLID-STATE BATTERY**

(30) Priority: 16.05.2025 JP 2025082483
(71) Applicant: Toyota Jidosha Kabushiki Kaisha, Toyota-shi, Aichi-ken 471-8571 (JP)
(72) Inventor: KUDO, So, Toyota-shi, Aichi-ken, 471-8571 (JP); FURUYA, Ryosuke, Toyota-shi, Aichi-ken, 471-8571 (JP); NAKAI, Takaaki, Toyota-shi, Aichi-ken, 471-8571 (JP); NAKAMOTO, Hirofumi, Toyota-shi, Aichi-ken, 471-8571 (JP)
(74) Representative: Cabinet Beau de Loménie

(57) **Abstract**

A solid-state battery (100) includes: an anode layer (20) including composite active material particles (60,61,62); and a solid electrolyte layer (30). The composite active material particles include an anode active material containing either or both of an Si element and an Sn element, and a binder. The solid electrolyte layer is disposed on one surface of the anode layer. At least a portion of the composite active material particles (60) is disposed so as to bite into the solid electrolyte layer (30). In an SEM image of a cross section of the anode layer and the solid electrolyte layer, the ratio of the area of portions of the composite active material particles biting into the solid electrolyte layer to the area of portions of the composite active material particles in the cross section is 3.9% or more and 7.2% or less.

## Description

### BACKGROUND OF THE INVENTION

### 1. Field of the Invention

The present disclosure relates to solid-state batteries.

### 2. Description of Related Art

Various technologies have been proposed regarding solid-state batteries such as that disclosed in Japanese Unexamined Patent Application Publication No. 2019-121557 (JP 2019-121557 A).

### SUMMARY OF THE INVENTION

To improve the capacity retention rate of a solid-state battery, there remains room for improvement in maintaining contact at the interface between an anode layer and a solid electrolyte layer during expansion and contraction of the anode layer.

The present disclosure has been made in view of the above circumstances, and a primary object thereof is to provide a solid-state battery that can improve the capacity retention rate.

That is, the present disclosure includes the following aspects.
(1) A solid-state battery including: an anode layer including composite active material particles; and a solid electrolyte layer, wherein:
   the composite active material particles include an anode active material containing either or both of an Si element and an Sn element, and a binder;
   the solid electrolyte layer is disposed on one surface of the anode layer;
   at least a portion of the composite active material particles is disposed so as to bite into the solid electrolyte layer; and
   in a scanning electron microscope (SEM) image of a cross section of the anode layer and the solid electrolyte layer, the ratio of an area of portions of the composite active material particles biting into the solid electrolyte layer to an area of portions of the composite active material particles in the cross section is 3.9% or more and 7.2% or less.
(2) The solid-state battery according to (1), wherein, at an interface between the anode layer and the solid electrolyte layer, the ratio A/B of an interface length A between the composite active material particles disposed so as to bite into the solid electrolyte layer and the solid electrolyte layer to an interface length B between the anode layer and the solid electrolyte layer in an SEM image of a cross section of the solid-state battery is 0.63 or more and 0.85 or less.
(3) The solid-state battery according to (1) or (2), wherein the solid electrolyte layer includes a sulfide solid electrolyte as a solid electrolyte.
(4) A method for manufacturing the solid-state battery according to any one of (1) to (3), the method including:
   roll-pressing the anode layer and the solid electrolyte layer disposed on one surface of the anode layer at 40°C to 120°C and 50 kN/cm.

The present disclosure can provide a solid-state battery that can improve the capacity retention rate.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view showing an example of a solid-state battery according to the present disclosure;
FIG. 2 is a flowchart illustrating an example of a method for manufacturing a solid-state battery according to the present disclosure; and
FIG. 3 is a table showing various data for Examples 1 to 4 and Comparative Examples 1 and 2.

### DETAILED DESCRIPTION OF EMBODIMENTS

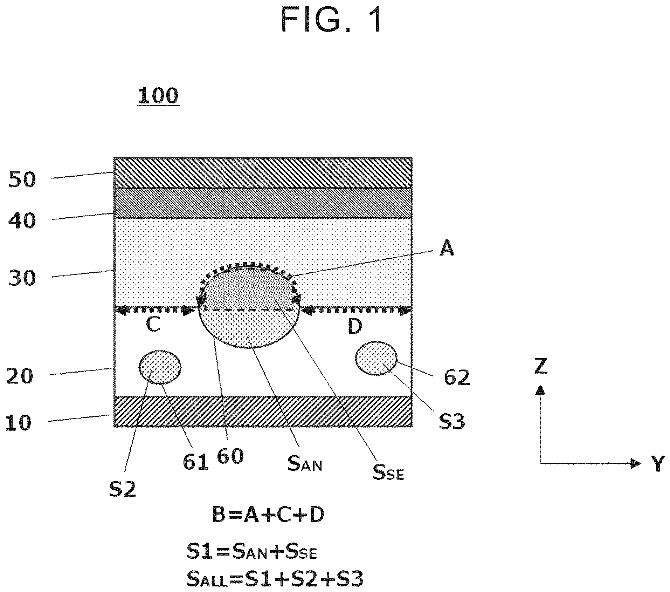

An embodiment according to the present disclosure will be described below. The dimensional relationships (such as length, width, and thickness) in the drawings do not reflect the actual dimensional relationships. The Y-direction in FIG. 1 is a planar direction or a width direction of an anode layer. The Z-direction in FIG. 1 is a stacking direction or a thickness direction of the anode layer.
Elements described in the "singular form" may include the plural form unless otherwise specified. For example, a particle may indicate a plurality of particles (a particle group). In the present disclosure, an example of a method for calculating the average particle size is as follows. First, in a transmission electron microscope (TEM) image or a scanning electron microscope (SEM) image at an appropriate magnification (for example, 1,000× to 1,000,000×), the particle size of a given particle is calculated assuming that the particle is spherical. Such particle size calculation based on TEM or SEM observation is performed for 200 to 300 particles of the same kind, and the average of their particle sizes is taken as the average particle size.

### 1. Solid-State Battery

The present disclosure provides a solid-state battery including: an anode layer including composite active material particles; and a solid electrolyte layer.
The composite active material particles include an anode active material containing either or both of an Si element and an Sn element, and a binder.
The solid electrolyte layer is disposed on one surface of the anode layer.
At least a portion of the composite active material particles is disposed so as to bite into the solid electrolyte layer.
In a scanning electron microscope (SEM) image of a cross section of the anode layer and the solid electrolyte layer, the ratio of the area of portions of the composite active material particles biting into the solid electrolyte layer to the area of portions of the composite active material particles in the cross section is 3.9% or more and 7.2% or less.

The solid-state battery according to the present disclosure includes an anode layer and a solid electrolyte layer. The solid-state battery according to the present disclosure typically includes a cathode, an electrolyte layer, and an anode.

In an SEM image of a cross section of the anode layer and the solid electrolyte layer, the ratio (S_{SE}/S_{ALL} × 100) of the area S_{SE} of portions of the composite active material particles biting into the solid electrolyte layer to the area S_{ALL} of portions of the composite active material particles in the cross section is 3.9% or more and 7.2% or less. As a result, it is possible to improve contact at the interface between the anode layer and the solid electrolyte layer after a plurality of charging and discharging cycles of the battery. From the viewpoint of improving the capacity retention rate of the solid-state battery, S_{SE}/S_{ALL} × 100 is 3.9% or more, 4.6% or more, 5.8% or more, or 7.2%.
At the interface between the anode layer and the solid electrolyte layer, the ratio A/B of the interface length A between the composite active material particles disposed so as to bite into the solid electrolyte layer and the solid electrolyte layer to the interface length B between the anode layer and the solid electrolyte layer in an SEM image of a cross section of the battery is 0.63 or more and 0.85 or less. From the viewpoint of improving the capacity retention rate of the solid-state battery, the interface length ratio A/B is 0.63 or more, 0.64 or more, 0.73 or more, or 0.85.

FIG. 1 is a schematic sectional view showing an example of the solid-state battery according to the present disclosure.
As shown in FIG. 1, a solid state battery 100 according to the present disclosure includes an anode current collector 10, an anode layer 20, a solid electrolyte layer 30, a cathode layer 40, and a cathode current collector 50 in this order. The anode layer 20 includes composite active material particles 60, 61, 62. At least a portion of the composite active material particle 60 is disposed so as to bite into the solid electrolyte layer 30.
The interface length B is a contact interface length between the anode layer 20 and the solid electrolyte layer 30 and, in the example shown in FIG. 1, is the sum of interface lengths A, C, D.
The interface length A is a contact interface length between the composite active material particle 60 disposed so as to bite into the solid electrolyte layer 30 and the solid electrolyte layer 30.
S_{SE} represents the area of a portion of the composite active material particle 60 that bites into the solid electrolyte layer 30.
S_{AN} represents the area of a portion of the composite active material particle 60 that is disposed in the anode layer 20.
The area S1 of the composite active material particle 60 is the sum of S_{SE} and S_{AN}.
S_{ALL} represents the total area of the composite active material particles 60, 61, 62 included in the anode layer 20 and the solid electrolyte layer 30 and, in the example shown in FIG. 1, is the sum of S1, S2, S3.

The anode includes an anode layer and an anode current collector.

The anode layer contains at least the composite active material particles and may further contain, as needed, a binder, a conductive material, an electrolyte, and the like. The composite active material particles include an anode active material containing either or both of an Si element and an Sn element, and a binder.
The proportion of the composite active material particles in the anode layer may be, for example, 40 mass% or more and 100 mass% or less.
The average particle size of the composite active material particles may be, for example, 0.1 µm or more and 100 µm or less.

The anode active material may be, for example, in the form of particles. The average particle size of the particles of the anode active material may be, for example, 0.05 µm or more and 30 µm or less.
The anode active material may be any material as long as it contains either or both of an Si element and an Sn element.
Examples of Si-based active materials containing an Si element include Si, SiO, and Si alloys. Examples of Sn-based active materials containing an Sn element include Sn and Sn alloys. The anode layer may further contain other anode active materials in addition to the Si-based active material and the Sn-based active material. Examples of such other anode active materials include at least one selected from the group consisting of carbon-based active materials, Li-based active materials, and lithium titanate.
The carbon-based active material may include, for example, at least one selected from the group consisting of graphite, soft carbon, and hard carbon. "Graphite" is a generic term for natural graphite and artificial graphite. The graphite may be a mixture of natural graphite and artificial graphite.
Examples of the Li-based active material include Li, lithium silicate, and Li alloys.
The proportion of the anode active material in the composite active material particles may be, for example, 85 mass% or more and 99.4 mass% or less.

Examples of the binder include styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), styrene-isoprene-styrene block copolymers (SIS), and ethylene-propylene-diene copolymers (EPDM). The proportion of the binder in the composite active material particles may be, for example, 0.5 mass% or more and 15 mass% or less.

The conductive material and the electrolyte used in the anode layer may be the same as those described below for the cathode layer.
The proportion of the conductive material in the anode layer may be, for example, 0.1 mass% or more and 5 mass% or less.
The proportion of the electrolyte in the anode layer may be, for example, 0 mass% or more and 60 mass% or less.
The shape of the anode layer as viewed in plan is not particularly limited and may be, for example, a quadrangular shape or a rectangular shape.
The thickness of the anode layer is, for example, 0.1 µm or more and 1000 µm or less, and may be 1 µm or more and 500 µm or less, or may be 30 µm or more and 100 µm or less.

Examples of the anode current collector include SUS, aluminum, copper, nickel, iron, titanium, and carbon. The thickness of the anode current collector may be, for example, in the range of 1 µm to 50 µm. The shape of the anode current collector as viewed in plan is not particularly limited, and examples thereof include a circular shape, an elliptical shape, a rectangular shape, and any polygonal shape. The anode current collector may have a configuration in which a buffer layer, an elastic layer, or a positive temperature coefficient (PTC) thermistor layer is disposed on the surface thereof.

The cathode includes a cathode layer and a cathode current collector.

The cathode layer contains at least a cathode active material, and may further contain, as needed, at least one selected from an electrolyte, a conductive material, and a binder.
The cathode layer may be disposed on one surface of the cathode current collector, or may be disposed on both surfaces of the cathode current collector.
The shape of the cathode layer as viewed in plan is not particularly limited and may be, for example, a quadrangular shape or a rectangular shape.

The cathode active material is not particularly limited, and examples thereof include rock-salt layered active materials such as LiCoO₂, LiMnO₂, LiNiO₂, LiVO₂, Li(NiCoMn)O₂, and Li(NiCoAl)O₂, spinel active materials such as LiMn₂O₄, Li₄Ti₅O₁₂, and Li(Ni_{0.5}Mn_{1.5})O₄, and olivine active materials such as LiFePO₄, LiMnPO₄, LiNiPO₄, and LiCoPO₄. Here, "(NiCoMn)" in "Li(NiCoMn)O₂" and "(NiCoAl)" in "Li(NiCoAl)O₂" indicate that the sum of the composition ratios of the elements in the parentheses is 1, and the composition ratios of the elements may take any values as long as the sum is 1. Li(NiCoMn)O₂ may be, for example, Li(Ni_{1/3}Co_{1/3}Mn_{1/3})O₂, Li(Ni_{0.5}Co_{0.2}Mn_{0.3})O₂, or LiNi_{0.8}Co_{0.15}Mn_{0.05}O₂, and Li(NiCoAl)O₂ may be, for example, Li(Ni_{0.81}Co_{0.15}Al_{0.04})O₂.
A coating layer containing an Li-ion conductive compound may be formed on the surface of the cathode active material. This is because a reaction between the cathode active material and a solid electrolyte (particularly a sulfide solid electrolyte) can be suppressed. Examples of the Li-ion conductive compound include B₂O₃, Li₂B₄O₇, LiBPO₄, Li₃PO₄, LiPO₃, and LiNbO₃. The thickness of the coating layer is, for example, 1 nm or more and 30 nm or less. The coating coverage of the Li-ion conductive compound on the cathode active material is, for example, 70% or more, and may be 90% or more or 100%. The method for applying the Li ion conductive compound is not particularly limited, and any conventionally known method can be employed as appropriate.

The cathode active material is typically in the form of particles. The cathode active material may be primary particles, or secondary particles formed by aggregation of primary particles.
The average particle size of the particles of the cathode active material is not particularly limited, and may be, for example, 0.01 µm or more and 50 µm or less, or may be 0.5 µm or more and 30 µm or less.

The proportion of the cathode active material in the cathode layer is, for example, 20 mass% or more, and may be 30 mass% or more, or 40 mass% or more. The proportion of the cathode active material in the cathode layer is, for example, 95 mass% or less, and may be 70 mass% or less, or 60 mass% or less.

Examples of the electrolyte include solid electrolytes. The solid electrolyte may be an inorganic solid electrolyte such as a sulfide solid electrolyte, a halide solid electrolyte, an oxide solid electrolyte, or a complex hydride solid electrolyte, or may be an organic solid electrolyte such as a gel electrolyte. From the viewpoint of ease with which the composite active material particles bite into the solid electrolyte layer, the solid electrolyte may be a relatively soft sulfide solid electrolyte.
The solid electrolyte may be in the form of particles from the viewpoint of ease of handling. The average particle size of the particles of the solid electrolyte is not particularly limited and may be 1 nm to 100 µm.
The proportion of the solid electrolyte in the cathode layer may be, for example, 1 mass% or more and 60 mass% or less.

The sulfide solid electrolyte is an electrolyte containing an S element. The sulfide solid electrolyte typically contains at least an Li element and an S element. The sulfide solid electrolyte may further contain an M element (M is at least one selected from P, As, Sb, Si, Ge, Sn, B, Al, Ga, and In). The sulfide solid electrolyte may also contain a halogen element such as F, Cl, Br, or I.

The sulfide solid electrolyte may be a glass-based (amorphous) sulfide solid electrolyte, a glass-ceramic-based sulfide solid electrolyte, or a crystalline sulfide solid electrolyte. The sulfide solid electrolyte may have a crystalline phase. Examples of the crystalline phase include a thio-LISICON crystalline phase, an argyrodite crystalline phase, and an LGPS crystalline phase.

The composition of the sulfide solid electrolyte is not particularly limited, and examples thereof include xLi₂S·(1 - x)P₂S₅ (0.5 ≤ x < 1) and yLiI·zLiBr·(100 - y - z)(xLi₂S·(1 - x)P₂S₅) (0.5 ≤ x < 1, 0 ≤ y ≤ 30, 0 ≤ z ≤ 30). In these compositions, x may satisfy 0.7 ≤ x ≤ 0.8. Other examples of the composition of the sulfide solid electrolyte include Li₇₋ₓPS₆₋ₓXₓ. X is at least one selected from F, Cl, Br, and I, and x satisfies 0 ≤ x < 2. Still other examples of the composition of the sulfide solid electrolyte include Li₄₋ₓMe₁₋ₓPₓS₄ (0 < x < 1). Me is at least one selected from Al, Zn, In, Ge, Si, Sn, Sb, Ga, and Bi. Examples of the sulfide solid electrolyte include LiI-LiBr-Li₂S-P₂S₅, Lil-Li₂S-P₂S₅, LiI-Li₂S-P₂O₅, and LiI-Li₃PO₄-P₂S₅.

Examples of the oxide solid electrolyte include materials having a garnet crystal structure and containing an Li element, an La element, an A element (A is at least one selected from Zr, Nb, Ta, and Al), and an O element. Examples of the oxide solid electrolyte include Li₂O-B₂O₃-P₂O₅, Li₂O-SiO₂, Li₂O-B₂O₃, Li_{1.3}Al_{0.3}Ti_{0.7}(PO₄)₃, Li₅La₃Ta₂O₁₂, Li₇La₃Zr₂O₁₂, Li₆BaLa₂Ta₂O₁₂, Li_{3.6}Si_{0.6}P_{0.4}O₄, Li₄SiO₄, Li₃PO₄, and Li₃₊ₓPO₄₋ₓNₓ (1 ≤ x ≤ 3).

Examples of the halide solid electrolyte include a solid electrolyte containing Li, D, and X (D represents at least one selected from Ti, Al, and Y, and X represents F, Cl, or Br).

The gel electrolyte may contain an electrolyte solution and a polymer material. The polymer material may form a polymer matrix. The polymer material may include, for example, at least one selected from the group consisting of polyvinylidene fluoride (PVdF), poly(vinylidene fluoride-co-hexafluoropropylene) (PVDF-HFP), polyacrylonitrile (PAN), PVdF-PAN, polyethylene oxide (PEO), polyethylene glycol (PEG), and derivatives thereof.

The cathode layer may contain a conductive material. Adding the conductive material improves the electronic conductive properties of the cathode layer. Examples of the conductive material include carbon-based conductive materials, metal particles, and conductive polymers. Examples of carbon-based conductive materials include particulate materials such as acetylene black (AB) and Ketjen black (KB), and fibrous materials such as vapor-grown carbon fibers (VGCFs), carbon nanotubes (CNTs), and carbon nanofibers (CNFs).
The proportion of the conductive material in the cathode layer may be, for example, 0.1 mass% or more and 5 mass% or less.

The cathode layer may contain a binder. Examples of the binder include the same ones as those described regarding the anode layer.
The proportion of the binder in the cathode layer may be, for example, 0.5 mass% or more.

The thickness of the cathode layer is, for example, 0.1 µm or more and 1000 µm or less, and may be 1 µm or more and 500 µm or less, or 30 µm or more and 100 µm or less.

The method for producing the cathode layer is not particularly limited, and examples thereof include a method in which a cathode active material, a conductive material, and a solvent are mixed to obtain a cathode slurry, and the cathode slurry is applied to a cathode current collector and dried to form a cathode layer. When forming the cathode layer, pressing may be performed to press the cathode layer in the thickness direction. The pressing is not particularly limited, and examples thereof include roll pressing and flat plate pressing. The solvent is, for example, the same as those described in "2. Method for Manufacturing Solid-State Battery" below.

Examples of materials for the cathode current collector include SUS, Cr, Au, Pt, Zn, aluminum, copper, nickel, iron, titanium, and carbon. The thickness of the cathode current collector is, for example, 0.1 µm or more and 100 µm or less. The shape of the cathode current collector as viewed in plan is not particularly limited, and examples thereof include a circular shape, an elliptical shape, a rectangular shape, and any polygonal shape. The cathode current collector may have a configuration in which a buffer layer, an elastic layer, or a PTC thermistor layer is disposed on the surface thereof.

The solid electrolyte layer is a layer formed between the cathode layer and the anode layer.
The solid electrolyte layer contains a solid electrolyte, and may further contain a binder and the like as needed.
Examples of the solid electrolyte include the same ones as those described above for the cathode layer.
One solid electrolyte may be used alone, or two or more solid electrolytes may be used in combination. When two or more solid electrolytes are used, the two or more solid electrolytes may be mixed, or a multilayer structure may be formed by forming respective layers of the two or more solid electrolytes.
The proportion of the solid electrolyte in the solid electrolyte layer is not particularly limited, and is, for example, 50 mass% or more, and may be 60 mass% or more and 100 mass% or less, 70 mass% or more and 100 mass% or less, or 100 mass%. The solid electrolyte layer may contain less than 1 mass% of an electrolytic solution with respect to the total amount of the solid electrolyte layer.
Examples of the binder include the binders that can be contained in the anode layer described above.
The content of the binder in the solid electrolyte layer may be 0 mass% to 10 mass% with respect to the total amount of the solid electrolyte layer.
The thickness of the solid electrolyte layer is, for example, 0.1 µm or more and 1000 µm or less, and may be 0.1 µm or more and 500 µm or less, or 0.1 µm or more and 100 µm or less. The shape of the solid electrolyte layer as viewed in plan is not particularly limited and may be, for example, a quadrangular shape or a rectangular shape.

The solid-state battery according to the present disclosure may be a lithium-ion battery. The solid-state battery may be a semi-solid-state battery or an all-solid-state battery. In the present disclosure, a semi-solid-state battery is a battery in which the solid electrolyte layer includes a solid component such as an inorganic solid electrolyte and a liquid component (for example, a solvent and an electrolyte solution). In the present disclosure, an all-solid-state battery is a battery in which the solid electrolyte layer includes a solid component such as an inorganic solid electrolyte. The solid-state battery according to the present disclosure may be either a primary battery or a secondary battery, and may particularly be a secondary battery. This is because a secondary battery can be repeatedly charged and discharged and is useful, for example, as an in-vehicle battery.
The solid-state battery according to the present disclosure may be of a monopolar type or a bipolar type.

The solid-state battery according to the present disclosure may further include a restraining jig that applies a restraining pressure along a thickness direction in order to form good ion-conduction paths and electron-conduction paths for the cathode, the solid electrolyte layer, and the anode. The restraining pressure is, for example, 0.1 MPa or more, and may be 1 MPa or more, or 5 MPa or more. The restraining pressure is, for example, 100 MPa or less, and may be 50 MPa or less, or 20 MPa or less.

The solid-state battery according to the present disclosure may include an exterior body.
The exterior body houses the cathode, the solid electrolyte layer, and the anode.
The material of the exterior body is not particularly limited as long as it is stable with respect to the solid electrolyte, and examples thereof include metals such as Al and SUS, and resins such as polypropylene, polyethylene, and acrylic resin.
The type of the exterior body is not particularly limited, and examples thereof include a coin type, a flat plate type, a cylindrical type, and a laminate type.
The shape of the exterior body as viewed in plan is not particularly limited, and may be, for example, a quadrangular shape, a rectangular shape, a circular shape, or an elliptical shape.

Examples of applications of the battery include power sources for vehicles such as hybrid electric vehicles (HEVs), plug-in hybrid electric vehicles (PHEVs), battery electric vehicles (BEVs), gasoline vehicles, and diesel vehicles. In particular, the battery may be used as a traction power source for an HEV, a PHEV, or a BEV. The battery may also be used as a power source for mobile bodies other than vehicles (for example, trains, ships, and aircraft), or as a power source for electrical products such as information processing devices.

### 2. Method for Manufacturing Solid-State Battery

The present disclosure provides a method for manufacturing a solid-state battery according to the present disclosure.
The method includes a pressing step of roll-pressing the anode layer and the solid electrolyte layer disposed on one surface of the anode layer at 40°C to 120°C and 50 kN/cm.

The method for manufacturing a solid-state battery according to the present disclosure may include (1) composite active material particle preparation step, (2) anode layer slurry preparation step, (3) coating step, (4) drying step, and (5) pressing step.

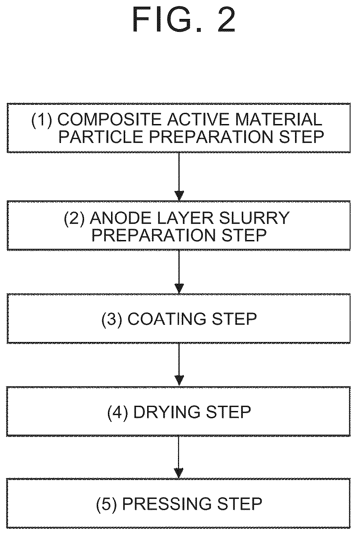

FIG. 2 is a flowchart illustrating an example of the method for manufacturing the solid-state battery according to the present disclosure.
As shown in FIG. 2, in the method for manufacturing a solid-state battery according to the present disclosure, (1) composite active material particle preparation step, (2) anode layer slurry preparation step, (3) coating step, (4) drying step, and (5) pressing step may be performed in this order.

### (1) Composite Active Material Particle Preparation Step

The composite active material particle preparation step is a step of preparing the composite active material particles.
A method for preparing the composite active material particles may include, for example, introducing an anode active material into a binder dispersion liquid obtained by dispersing a binder in a solvent, and subjecting the resulting composite active material slurry to spray drying at a predetermined spray pressure and a predetermined liquid feed rate to form composite particles.
Examples of the solvent include N-methylpyrrolidone (NMP), tetralin, diisobutyl ketone, butyl butyrate, mesitylene, heptane, dibutyl ether, decane, dodecane, isodecane, and toluene, and the solvent may contain two or more of these components.
The shape of the composite active material particles prepared in the composite active material particle preparation step may be flat or spherical.

### (2) Anode Layer Slurry Preparation Step

The anode layer slurry preparation step is a step of preparing an anode layer slurry containing the composite active material particles, the binder, a conductive material, and a solvent.
Examples of the binder include the same ones as those described above for the anode layer.
Examples of the conductive material include the same ones as those described above for the cathode layer.
Examples of the solvent include the same ones as those described above for the composite active material slurry.

### (3) Coating Step

The coating step is a step of applying the anode layer slurry onto one surface of the anode current collector.
The coating method is not particularly limited, and examples thereof include doctor blade coating, metal mask printing, electrostatic coating, dip coating, spray coating, roll coating, gravure coating, and screen printing.

### (4) Drying Step

The drying step is a step of drying the anode layer slurry after the coating step to obtain the anode layer.
The method for drying the anode layer slurry is not particularly limited, and examples thereof include natural drying, reduced-pressure drying, and vacuum drying.

### (5) Pressing Step

The pressing step is a step of roll-pressing the anode layer and the solid electrolyte layer disposed on one surface of the anode layer at 40°C to 120°C and 50 kN/cm. By controlling either or both of the temperature and the pressure during roll pressing, S_{SE}/S_{ALL} × 100 and the interface length ratio A/B can be controlled.
The temperature during roll pressing may be 40°C or more, 60°C or more, 100°C or more, or 120°C.
In the pressing step, pressing may be performed in a state in which the battery includes the anode and the solid electrolyte layer in this order, or in a state in which the battery includes the anode, the solid electrolyte layer, and the cathode in this order.

### Example 1

### Preparation of Composite Active Material Particles

Si particles as an anode active material were introduced into a binder dispersion liquid obtained by dispersing a binder in an organic solvent. The resulting composite active material slurry was subjected to spray drying at a predetermined spray pressure and a predetermined liquid feed rate to form composite particles, thereby producing composite active material particles (composite active material particle preparation step).

### Preparation of Anode

A binder, a conductive material, a sulfide solid electrolyte as a solid electrolyte (SE), and the composite active material particles prepared above were added to an organic solvent. The resulting mixture was then kneaded using an ultrasonic homogenizer to obtain an anode layer slurry (anode layer slurry preparation step).
The anode layer slurry thus obtained was applied onto an Ni foil as an anode current collector (coating step).
The anode layer slurry was dried to produce an anode having an anode layer on the anode current collector (drying step).

### Preparation of Cathode

A binder, a conductive material, an SE, and LiNi_{0.8}Co_{0.15}Mn_{0.05}O₂ as a cathode active material were added to an organic solvent. The resulting mixture was then kneaded using an ultrasonic homogenizer to obtain a cathode layer slurry. The cathode layer slurry thus obtained was then applied onto an Al foil as a cathode current collector and dried to produce a cathode having a cathode layer on a cathode current collector.

### Preparation of Solid Electrolyte Layer

A binder and an SE were added into an organic solvent. The resulting mixture was then kneaded using an ultrasonic homogenizer to obtain a solid electrolyte layer slurry. The solid electrolyte layer slurry thus obtained was applied onto an Al foil as a base material and dried to produce a solid electrolyte layer with Al foil.

### Fabrication of Battery

The cathode layer of the cathode and the solid electrolyte layer of the solid electrolyte layer with Al foil were brought into contact with each other, and the resulting stack was roll-pressed at 165°C and 50 kN/cm. The Al foil was then peeled off from the solid electrolyte layer with Al foil to transfer a first solid electrolyte layer onto the cathode layer. The anode layer of the anode and the solid electrolyte layer of the solid electrolyte layer with Al foil were brought into contact with each other, and the resulting stack was roll-pressed at 40°C and 50 kN/cm. The Al foil was then peeled off from the solid electrolyte layer with Al foil to transfer a second solid electrolyte layer onto the anode layer (pressing step). The anode onto which the second solid electrolyte layer had been transferred was punched out using a punching machine with a diameter of 13.00 mm. The cathode onto which the first solid electrolyte layer was transferred was punched out using a punching machine with a diameter of 11.28 mm. A third solid electrolyte layer was further transferred onto the second solid electrolyte layer of the anode onto which the second solid electrolyte layer had been transferred, using a uniaxial press. The third solid electrolyte layer of the anode onto which the solid electrolyte layer had been transferred, and the first solid electrolyte layer of the cathode onto which the solid electrolyte layer had been transferred, were disposed so as to face each other, thereby assembling a battery. Finally, current-collecting tabs were attached to the cathode and the anode, and the cathode, the solid electrolyte layer, and the anode were sealed in an aluminum laminate using a vacuum laminating sealer. The battery was fabricated by applying a restraining pressure of 5 MPa.

### Comparative Example 1

A battery was obtained in the same manner as in Example 1, except that, in the section "Fabrication of Battery," the anode layer of the anode and the solid electrolyte layer of the solid electrolyte layer with Al foil were brought into contact with each other and the resulting stack was roll-pressed at 25°C and 25 kN/cm, and the Al foil was peeled off from the solid electrolyte layer with Al foil to transfer the second solid electrolyte layer onto the anode layer.

### Comparative Example 2

A battery was obtained in the same manner as in Example 1, except that, in the section "Fabrication of Battery," the anode layer of the anode and the solid electrolyte layer of the solid electrolyte layer with Al foil were brought into contact with each other and the resulting stack was roll-pressed at 25°C and 50 kN/cm, and the Al foil was peeled off from the solid electrolyte layer with Al foil to transfer the second solid electrolyte layer onto the anode layer.

### Example 2

A battery was obtained in the same manner as in Example 1, except that, in the section "Fabrication of Battery," the anode layer of the anode and the solid electrolyte layer of the solid electrolyte layer with Al foil were brought into contact with each other and the resulting stack was roll-pressed at 60°C and 50 kN/cm, and the Al foil was peeled off from the solid electrolyte layer with Al foil to transfer the second solid electrolyte layer onto the anode layer.

### Example 3

A battery was obtained in the same manner as in Example 1, except that, in the section "Fabrication of Battery," the anode layer of the anode and the solid electrolyte layer of the solid electrolyte layer with Al foil were brought into contact with each other and the resulting stack was roll-pressed at 100°C and 50 kN/cm, and the Al foil was peeled off from the solid electrolyte layer with Al foil to transfer the second solid electrolyte layer onto the anode layer.

### Example 4

A battery was obtained in the same manner as in Example 1, except that, in the section "Fabrication of Battery," the anode layer of the anode and the solid electrolyte layer of the solid electrolyte layer with Al foil were brought into contact with each other and the resulting stack was roll-pressed at 120°C and 50 kN/cm, and the Al foil was peeled off from the solid electrolyte layer with Al foil to transfer the second solid electrolyte layer onto the anode layer.

### Cross-Sectional Observation

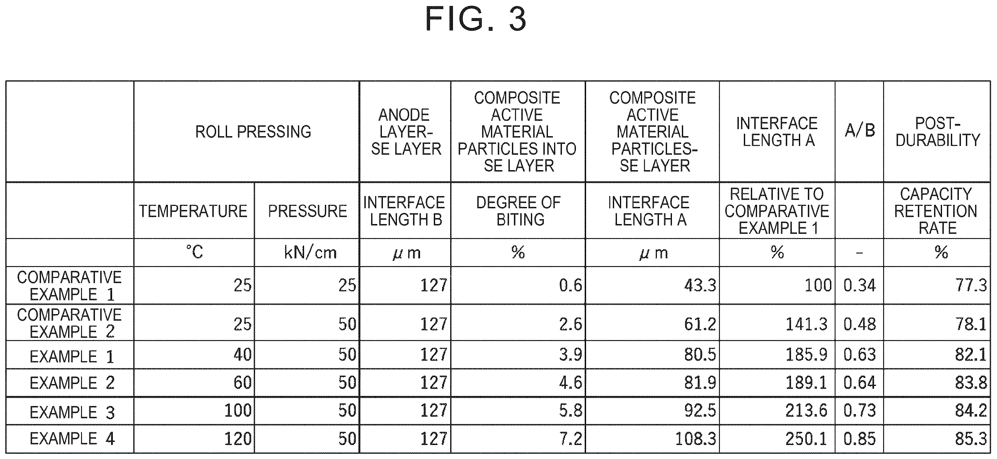

The fabricated batteries were disassembled, and cross sections of the anode layer and the solid electrolyte (SE) layer were analyzed using a scanning electron microscope (SEM). The SEM accelerating voltage was set to 2.0 kV, the magnification was set to 1000×, and five arbitrary locations were observed.
The obtained images were imported into ImageJ.
The ratio of the area of portions of composite active material particles biting into the solid electrolyte layer to the area of portions of the composite active material particles in the SEM images of the cross sections of the anode layer and the SE layer (that is, the degree to which the composite active material particles bite into the SE layer, assuming that the entirety of the composite active material particles in the SEM images of the cross sections of the negative electrode layer and the SE layer to be 100%) was calculated using image analysis. The degree of biting into the SE represents the area ratio of the composite active material particles that enter the SE layer in the SEM images.
The interface length A between the composite active material particles biting into and contained in the SE layer and the SE layer was measured using a length-measuring tool of ImageJ.
The interface between the anode layer and the SE layer was identified based on the difference in color tone in the SEM images. The interface length B between the anode layer and the SE layer was 127 µm. The ratio A/B of the interface length A between the composite active material particles disposed so as to bite into the SE layer and the SE layer to the interface length B between the anode layer and the SE layer was calculated. The results are shown in FIG. 3.

### Battery Durability Evaluation

The capacity retention rates of the fabricated all-solid-state batteries were evaluated as follows. First, a discharge capacity obtained when charging and discharging were performed at 1/3 C within the SOC range of 5% to 95% was defined as an initial capacity. Then, a post-durability capacity, namely a capacity after 80 cycles of charging and discharging at 1/3 C within the SOC range of 5% to 95%, was calculated.
A post-durability discharge capacity retention rate was calculated using the following equation. The results are shown in FIG. 3.
Post-durability discharge capacity retention rate (%) = (Post-durability discharge capacity/Initial capacity) × 100
FIG. 3 is a table showing various data for Examples 1 to 4 and Comparative Examples 1 and 2.
It was confirmed that Examples 1 to 4 exhibit higher post-durability discharge capacity retention rates than Comparative Examples 1 and 2.
From the above, it was confirmed that, in the SEM images of the cross sections of the anode layer and the SE layer, when the ratio of the area of portions of composite active material particles disposed so as to bite into the SE layer to the area of portions of the composite active material particles contained in the anode layer in the cross section is 3.9% or more and 7.2% or less, the post-durability discharge capacity retention rate can be improved.

## Claims

1. A solid-state battery (100) comprising:
an anode layer (20) including composite active material particles (60,61,62); and
a solid electrolyte layer (30), wherein:
the composite active material particles include an anode active material containing either or both of an Si element and an Sn element, and a binder;
the solid electrolyte layer is disposed on one surface of the anode layer;
at least a portion of the composite active material particles (60) is disposed so as to bite into the solid electrolyte layer (30); and
in a scanning electron microscope image of a cross section of the anode layer (20) and the solid electrolyte layer (30), a ratio of an area of portions of the composite active material particles (60) biting into the solid electrolyte layer to an area of portions of the composite active material particles (60,61,62) in the cross section is 3.9% or more and 7.2% or less.

2. The solid-state battery according to claim 1, wherein, at an interface between the anode layer (20) and the solid electrolyte layer (30), a ratio A/B of an interface length A between the composite active material particles (30) disposed so as to bite into the solid electrolyte layer and the solid electrolyte layer to an interface length B between the anode layer and the solid electrolyte layer in a scanning electron microscope image of a cross section of the solid-state battery is 0.63 or more and 0.85 or less.

3. The solid-state battery according to claim 1 or 2, wherein the solid electrolyte layer (30) includes a sulfide solid electrolyte as a solid electrolyte.

4. A method for manufacturing the solid-state battery according to any one of claims 1 to 3, the method comprising roll-pressing the anode layer (20) and the solid electrolyte layer (30) disposed on one surface of the anode layer at 40°C to 120°C and 50 kN/cm.
